Europäisches Patentamt

(19) European Patent Office

Office européen des brevets

(11) EP 0 672 623 B1

(12) **FASCICULE DE BREVET EUROPEEN**

(45) Date de publication et mention
de la délivrance du brevet:
**28.07.1999 Bulletin 1999/30**

(51) Int. Cl.$^6$: **C02F 1/46**, G21F 9/06

(21) Numéro de dépôt: **95400543.5**

(22) Date de dépôt: **14.03.1995**

(54) **Procédé de destruction de solutés organiques complexants, présents dans une solution aqueuse telle qu'un effluent radioactif**

Verfahren zur Entsorgung gelöster organischer Komplexbildner aus einer wässerigen Lösung, z.B. radioaktiver Abwässer

Process for the destruction of soluble organic complexing agents, from an aqueous solution such as radio-active effluent

(84) Etats contractants désignés:
**DE FR GB**

(30) Priorité: **16.03.1994 FR 9403056**

(43) Date de publication de la demande:
**20.09.1995 Bulletin 1995/38**

(73) Titulaires:
- **COMMISSARIAT A L'ENERGIE ATOMIQUE 75015 Paris Cédex 15 (FR)**
- **COMPAGNIE GENERALE DES MATIERES NUCLEAIRES 78140 Velizy Villacoublay (FR)**

(72) Inventeurs:
- **Le Naour, Claire F-93160 Noisy-Le-Grand (FR)**
- **Moisy, Philippe F-37000 Tours (FR)**
- **Madic, Charles F-94320 Thiais (FR)**

(74) Mandataire:
**Des Termes, Monique et al Société Brevatome 25, rue de Ponthieu 75008 Paris (FR)**

(56) Documents cités:
**EP-A- 0 567 375**      **WO-A-91/13029**
**US-A- 3 340 175**

Printed by Xerox (UK) Business Services
2.16.7/3.6

**Description**

La présente invention a pour objet un procédé de destruction de solutés organiques présents dans une solution aqueuse.

De façon plus précise, elle concerne la destruction de solutés organiques complexants présents dans des effluents aqueux radioactifs. Ces solutés organiques complexants peuvent appartenir aux familles des acides carboxyliques, hydroxycarboxyliques, polycarboxyliques, polyhydroxypolycarboxyliques, aminopolycarboxyliques et polyaminopolycarboxyliques, comme par exemple les acides formique, oxalique, dihydroxymalonique, citrique et tartrique.

Le développement de l'énergie nucléaire a pour corollaire une production accrue d'effluents et de déchets radioactifs, qu'il convient de gérer le plus efficacement possible afin de protéger l'environnement actuel et futur, en minimisant notamment la quantité de déchet finale correspondant à une tonne de combustible consommé par les centrales. Pour atteindre cet objectif, on utilise de plus en plus des réactifs dits "sans sel", qui après usage sont totalement destructibles en gaz rejetables dans l'environnement. Ainsi, on peut noter l'emploi :

- de solutions aqueuses constituées de mélanges d'acides organiques complexants contenant une faible concentration d'ions métalliques réducteurs, pour la décontamination des circuits primaires des réacteurs nucléaires,
- de solutions aqueuses contenant des acides organiques ou leurs sels non métalliques ou encore des bases organiques, pour le traitement de régénération du solvant du procédé PUREX, constitué d'une solution de phosphate de tributyle (TBP) dans un mélange industriel de carbures aliphatiques, et
- de solutions aqueuses contenant des mélanges de substances organiques pour la décontamination des appareillages des usines de retraitement.

A l'issue de ces opérations, il convient de traiter les effluents radioactifs générés, en vue, in fine, du conditionnement des radionucléides dans des matrices solides : ciment, bitume, résine thermodurcissable ou verre. Les déchets solides ainsi conditionnés seront stockés, en fonction de la catégorie à laquelle ils appartiennent, soit en site géologique profond, soit en site de surface. Quel que soit le type de matrice solide envisagé, il est impératif de détruire tous les agents complexants, préalablement au conditionnement. En effet, si ces agents complexants étaient incorporés dans les matrices solides, ils constitueraient une source de danger potentiel grave par leur action de solubilisation des radionucléides en cas de lixiviation des colis de déchets.

La destruction de solutés organiques contenus dans des effluents radioactifs peut être effectuée par voie sèche, par exemple par calcination, ou par voie humide, par exemple par oxydation.

Des procédés de calcination ont été utilisés antérieurement pour la vitrification d'effluents de haute activité issus des opérations de retraitement des combustibles. Dans ce cas, on peut détruire le composé organique qui a été ajouté aux solutions afin d'empêcher la volatilisation du ruthénium, mais cette technique ne permet pas de détruire de façon satisfaisante tous les types de complexants organiques. De plus, ces procédés de calcination ont pour inconvénient d'exiger l'évaporation de la totalité de l'eau contenue dans l'effluent, ce qui nécessite une forte consommation d'énergie et conduit de plus à des difficultés de traitement des gaz produits qui peuvent contenir des aérosols radioactifs à température élevée.

Les procédés de destruction par voie humide sont donc plus intéressants. Parmi ces procédés, on connaît par le document FR-A-2 653 112 un procédé de destruction de complexants organiques par oxydation, au moyen d'ions $Co3^+$ qui peuvent être générés en continu par électrolyse de la solution. Ce procédé est satisfaisant mais il présente l'inconvénient de nécessiter l'addition d'ions cobalt à la solution.

Un procédé du même type est décrit dans EP-A-0 297 738 et fait appel à l'action d'ions AgII comme intermédiaire pour réaliser l'oxydation des déchets. Dans ce cas, il est de plus nécessaire d'utiliser un séparateur poreux entre l'anode et la cathode, ce qui limite la densité de courant susceptible d'être utilisée, et rend l'installation de traitement plus complexe.

La présente invention a précisément pour objet un procédé de destruction de solutés organiques en solution aqueuse, qui ne nécessite pas l'adjonction d'un agent oxydant et qui peut être mis en oeuvre dans des conditions douces avec des rendements de destruction atteignant 100 %.

Selon l'invention, le procédé de destruction d'au moins un soluté organique présent dans une solution aqueuse conductrice de l'électricité, consiste à soumettre la solution aqueuse à une électrolyse dans une cellule d'électrolyse comprenant une électrode de travail, en appliquant à l'électrode de travail un potentiel suffisant pour détruire le(s) soluté(s) par oxydation électrolytique, et à modifier périodiquement le potentiel appliqué à l'électrode de travail ou le sens de l'intensité du courant traversant la cellule de façon à réaliser périodiquement une régénération de l'électrode de travail.

Pour pouvoir être utilisée dans ce procédé, la solution aqueuse de départ comprenant le(s) soluté(s) organique(s) à détruire doit donc être conductrice du courant électrique.

Si elle ne l'est pas naturellement, on lui ajoute un soluté conducteur qui n'interfère pas avec les mécanismes de destruction du (des) soluté(s) organique(s) à détruire. De tels solutés conducteurs peuvent être constitués par exemple par l'acide nitrique.

Dans le cas des effluents radioactifs, ceux-ci contiennent généralement de l'acide nitrique et il n'est pas nécessaire de leur ajouter un soluté conducteur.

Selon le procédé de l'invention, on oxyde les solutés organiques à détruire sur l'électrode de travail considéré comme l'anode, mais on évite l'empoisonnement de cette électrode par les produits d'oxydation intermédiaires du soluté organique à détruire, ou la passivation de cette électrode par formation d'une couche d'oxyde, en effectuant périodiquement une régénération de l'électrode de travail par application d'un potentiel différent ou par modification du sens de passage du courant traversant la cellule d'électrolyse.

Selon un premier mode de réalisation de l'invention, adapté à la réalisation de l'électrolyse selon le mode potentiostatique, on modifie périodiquement le potentiel de l'électrode de travail de façon à effectuer des cycles successifs comprenant chacun une première étape d'électrolyse à un potentiel $E_1$ pendant une durée $t_1$ et une deuxième étape d'électrolyse à un potentiel $E_2$ pendant une durée $t_2$.

Dans ce mode de réalisation de l'invention, le potentiel $E_1$ est choisi en fonction de la nature du soluté à détruire pour permettre sa destruction pendant la première étape de chaque cycle. Pendant cette première étape, il se produit un empoisonnement progressif de l'électrode de travail par les poduits d'oxydation intermédiaires du soluté, et pour rendre à cette électrode toute son efficacité, on la soumet pendant la deuxième étape à un potentiel $E_2$ pendant une durée $t_2$ généralement plus brève que la durée $t_1$ de la première étape, afin de régénérer cette électrode.

Généralement, la durée $t_1$ de la première étape d'électrolyse est de 20 à 1200 s. La durée $t_2$ de l'étape de régénération est plus brève, généralement de 5 à 60 s., par exemple de 10 s.

Le potentiel $E_2$ utilisé dans la deuxième étape est choisi en fonction du soluté organique à détruire et des produits responsables de l'empoisonnement de l'électrode de travail. Généralement, l'écart entre $E_1$ et $E_2$ est de 0,5 à 2 Volts.

Selon un second mode de réalisation du procédé de l'invention, on réalise l'électrolyse selon le mode intensiostatique et, dans ce cas, on inverse périodiquement le sens du courant dans la cellule de façon à effectuer des cycles successifs comprenant chacun une première étape à une intensité de courant I pendant une durée $t_1$ et une deuxième étape à la même intensité mais avec un courant inversé pendant une durée $t_2$.

Ce second mode de réalisation du procédé de l'invention est particulièrement avantageux, car en inversant le sens du courant dans la cellule, on régénère la première électrode, et on utilise pendant ce temps la deuxième électrode comme électrode de travail, ce qui la fait participer également à la destruction du soluté organique. Ainsi, L'inversion périodique du sens du courant nécessaire à la destruction du poison qui se forme sur l'électrode de travail, n'induit pas de perte de temps pour la destruction du soluté organique.

Dans ce cas, les durées $t_1$ et $t_2$ des deux étapes sont de préférence égales ; elles sont choisies en fonction du soluté à détruire et de la nature des électrodes utilisées. Des durées de 10 à 100 s, par exemple de 30 s, sont généralement appropriées.

L'intensité de courant traversant la cellule est choisie également en fonction du soluté organique à détruire. Généralement, cette intensité de courant est de 4 à 20 mA/cm$^2$.

Dans les deux modes de réalisation de l'invention, on peut utiliser des électrodes de travail en métaux nobles, par exemple en platine, en iridium, en or ou en leurs alliages, et un électrolyseur ne comprenant pas de séparateur pour isoler les compartiments anodique et cathodique de l'électrolyseur, en raison du caractère irréversible des réactions électrochimiques mises en jeu pour la destruction des solutés organiques.

Pour mettre en oeuvre le procédé de l'invention, on opère de préférence à la pression atmosphérique et à la température ambiante, mais on peut bien entendu utiliser également des températures et des pressions supérieures ou inférieures. Le procédé de l'invention peut être mis en oeuvre dans un électrolyseur de conception simple, dans des conditions douces. Il est donc d'une réalisation aisée.

Ce procédé s'applique en particulier à la destruction des solutés organique complexants tels que les acides carboxyliques, hydroxycarboxyliques, aminocarboxyliques, polycarboxyliques, polyhydroxypolycarboxyliques, aminopolycarboxyliques et polyaminopolycarboxyliques. L'oxydation de ces acides conduit à la formation de $CO_2$, $N_2$ (dans le cas des acides aminocarboxyliques) et $H_2O$. Il s'agit donc de composés gazeux ($CO_2$, $N_2$) ou liquide ($H_2O$) rejetables dans l'environnement.

Comme cette destruction conduit à la formation d'hydrogène, et éventuellement à la génération d'oxygène lorsque le soluté organique aura été détruit, il est important de procéder à une ventilation de l'électrolyseur afin de s'affranchir des risques d'explosion induits par la présence de ces deux gaz.

De préférence dans l'invention, on utilise un électrolyseur capable de fonctionner comme un réacteur continu, pour assurer la destruction progressive des solutés organiques au cours du cheminement de la solution dans l'électrolyseur.

Aussi, selon l'invention, on peut utiliser une installation pour la destruction par électrolyse des solutés organiques présents dans une solution aqueuse, comprenant :

- une enceinte comprenant deux parois opposées entre lesquelles sont disposées en chicanes deux séries d'électrodes de façon telle que deux électrodes consécutives d'une série soient séparées par une électrode de l'autre série,
- des moyens pour faire circuler en continu la solution aqueuse entre les deux séries d'électrodes,
- des moyens pour relier les électrodes de la première série et les électrodes de la deuxième série respectivement aux 2 pôles d'un générateur de courant, et
- des moyens pour faire circuler un gaz dans la partie supérieure de l'enceinte afin d'éliminer en continu de cette enceinte les gaz dégagés par l'électrolyse.

Une telle disposition des électrodes peut être obtenue avec une enceinte parallélépipédique à l'intérieur de laquelle les électrodes sont disposées verticalement, la première série d'électrodes étant en contact avec une seule paroi latérale de l'enceinte et la deuxième série d'électrodes n'étant pas en contact avec cette paroi latérale mais avec la paroi latérale opposée, pour permettre une circulation du liquide entre toutes les électrodes. Les gaz produits par l'électrolyse se dégagent verticalement et peuvent être collectés dans un récipient formant couvercle qui est ventilé en permanence de façon à ce que la teneur du mélange gazeux en hydrogène soit inférieure à la limite réglementaire. Le flux gazeux de ventilation de l'électrolyseur qui peut contenir des oxydes d'azote, est épuré avant rejet dans l'environnement.

Le procédé de l'invention présente donc de nombreux avantages, notamment pour la destruction des solutés organiques complexants présents dans des effluents radioactifs.

En effet, il présente une grande sécurité, car le potentiel énergétique accumulé dans l'électrolyseur est quasi nul ; il est uniquement lié à la composition de l'effluent à traiter.

Le procédé est très efficace, car on peut obtenir une destruction quantitative des complexants organiques en gaz carbonique, en eau et éventuellement en azote.

Il ne nécessite pas la mise en oeuvre de pressions et/ou de températures élevées, ce qui est un atout important à de nombreux égards, tel que la sécurité, la possibilité d'utiliser des matériaux classiques et peu onéreux pour la fabrication de l'électrolyseur et la très faible corrosion attendue pour ces matériaux, qui a pour conséquence une production quasi nulle de déchets solides secondaires.

Il ne conduit pas à la génération de déchets solides secondaires.

L'électrolyseur est d'une conception simple et le procédé peut être mis en oeuvre et contrôlé à distance de façon aisée.

D'autres caractéristiques et avantages de l'invention apparaîtront mieux à la lecture de la description qui suit d'exemples de réalisation donnés bien entendu à titre illustratif et non limitatif, en référence aux dessins annexés.

- La figure 1 représente en perspective un électrolyseur pour la mise en oeuvre du procédé de l'invention,
- la figure 2 est une courbe illustrant les variations du courant d'électrolyse en fonction de la durée, pour une électrolyse réalisée en mode potentiostatique, sans modification périodique du potentiel appliqué, et
- la figure 3 est une courbe illustrant les variations du courant d'électrolyse en fonction de la durée, lors d'une électrolyse réalisée en mode potentiostatique avec variation périodique du potentiel appliqué à l'électrode de travail.

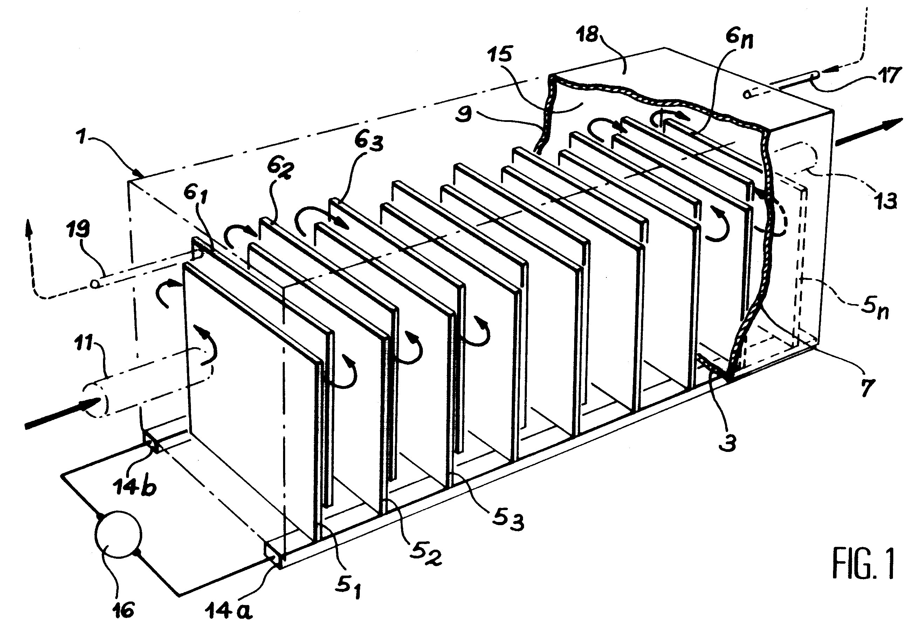

Sur la figure 1, on a représenté en perspective un électrolyseur convenant à la mise en oeuvre du procédé de l'invention.

Sur cette figure, on voit que l'électrolyseur 1 est de forme parallélépipédique et comprend un fond 3 sur lequel sont disposées verticalement une première série d'électrodes $5_1$, $5_2$, $5_3$....$5_n$ qui sont en contact seulement avec la paroi latérale 7 de l'électrolyseur, et une seconde série d'électrodes $6_1$, $6_2$,... $6_n$ qui sont en contact uniquement avec la paroi latérale opposée 9 de l'électrolyseur. Ainsi, on détermine entre les deux parois opposées 7 et 9 un trajet pour le cheminement de la solution aqueuse à traiter dans le sens indiqué par les flèches. La solution à traiter peut être introduite dans l'électrolyseur par une conduite d'entrée 11 et récupérée à la sortie de l'électrolyseur dans la conduite 13. Les électrodes de la première série $5_1$, $5_2$ ... $5_n$ et les électrodes de la deuxième série $6_1$, $6_2$,.... $6_n$ sont alimentées respectivement en courant électrique par les dispositifs d'alimentation électrique 14a et 14b situés en-dessous du fond 3 de l'électrolyseur de façon à relier la première série à l'un des pôles d'un générateur de courant électrique 16 et la deuxième série d'électrodes à l'autre pôle du générateur de courant électrique 16. A sa partie supérieure, l'électrolyseur comporte, en-dessous du couvercle 18, un espace 15 de collection des gaz produits lors de l'électrolyse, qui peut être ventilé par mise en circulation d'un gaz de balayage introduit par la conduite 17 et évacué par la conduite 19, vers un système d'épuration des gaz. Dans cet électrolyseur, on peut mettre en oeuvre le procédé de l'invention pour détruire des solutés organiques complexants tels que l'acide formique, l'acide oxalique et l'acide dihydroxymalonique. Les équations correspondant à la destruction de ces divers solutés sont les suivantes :

Acide formique

| A l'anode: | HCOOH | -2e | → | $CO_2 + 2H^+$ | (1) |
| A la cathode | $2H^+$ | + 2e | → | $H_2$ | (2) |
| Bilan de la cellule | HCOOH | | $\rightleftarrows$ | $CO_2 + H_2$ | (3) |

Acide oxalique

| A l'anode: | HOOCCOOH | -2e | → | $2CO_2 + 2H^+$ | (4) |
| A la cathode: | $2H^+$ | +2e | → | $H_2$ | (5) |
| Bilan de la cellule | HOOCCOOH | | $\rightleftarrows$ | $2CO_2 + H_2$ | (6) |

Acide dihydroxymalonique

| A l'anode: | $HOOCC(OH)_2COOH$ | -4e | → | $3CO_2 + 4H^+$ | (7) |
| A la cathode | $4H^+$ | +4e | → | $2H_2$ | (8) |
| Bilan de la cellule | $HOOCC(OH)_2COOH$ | | $\rightleftarrows$ | $3CO_2 + 2H_2$ | (9) |

**Exemple 1** : Destruction de l'acide dihydroxymalonique (DHM)

Dans cet exemple, on part d'une solution aqueuse d'un volume de 80 ml contenant 4 mmol de DHM, ayant une concentration en acide nitrique de 0,1 mol/l et une concentration en DHM de 0,05 mol/l. On soumet cette solution à une électrolyse dans un électrolyseur sans diaphragme, comportant une électrode de travail et une électrode auxiliaire constituées toutes deux par des disques de platine d'un diamètre de 2,5 cm, soit d'une surface de 4,91 $cm^2$. On réalise l'électrolyse à la pression et à la température ambiantes, avec une agitation mécanique de la solution soumise en outre à un bullage d'argon saturé en eau, en mode potentiostatique, en imposant à l'électrode de travail un potentiel de 1,2 Volts par rapport à un électrode de référence au calomel saturé (ECS), ce qui correspond au potentiel caractéristique de la destruction de l'acide DHM.

On réalise l'électrolyse pendant 4 heures.

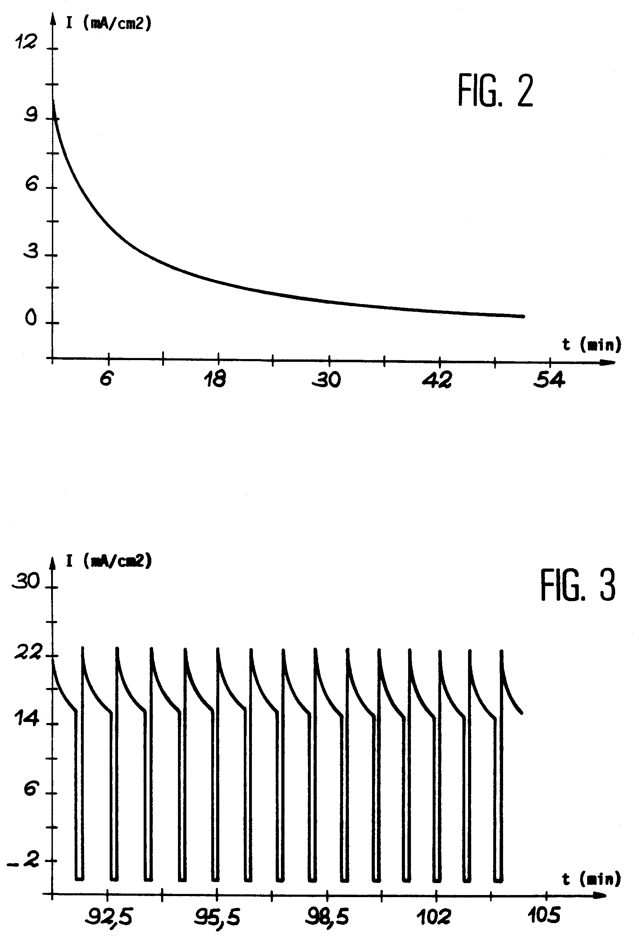

La figure 2 représente la variation du courant d'électrolyse, soit de la densité de courant I (en mA/$cm^2$) en fonction du temps (en min.). Sur cette figure, on voit que le courant d'électrolyse chute de façon très importante dès le début de l'électrolyse, ce qui montre l'empoisonnement de l'électrode de travail et ne permet pas de réaliser la destruction de l'acide DHM de façon satisfaisante. En effet, le courant d'électrolyse atteint des valeurs très faibles après environ 1 heure. Après 4 heures, la quantité de DHM détruite, déterminée par électrophorèse capillaire et par mesure de la quantité de courant ayant circulé dans l'électrolyseur, est très faible et proche de 3 % de la quantité initiale contenue dans la solution aqueuse.

Cet exemple montre ainsi qu'on ne peut réaliser la destruction du soluté organique sans mettre en oeuvre une variation périodique du potentiel appliqué à l'électrode de travail ou de l'intensité du courant traversant la cellule pour régénérer périodiquement l'électrode de travail.

**Exemple 2** : Destruction d'acide formique.

Dans cet exemple, on réalise l'électrolyse d'une solution aqueuse d'un volume de 50 ml contenant 0,05 mol/l d'acide formique et 0,1 mol/l de $NaClO_4$ dans un électrolyseur sans diaphragme comportant une électrode de travail et une électrode auxiliaire constituées chacune par une plaque rectangulaire de platine d'une longueur de 5 cm et d'une largeur de 0,9 cm. On réalise l'électrolyse, en mode intensiostatique, sous agitation et bullage d'argon comme dans l'exemple 1, en imposant une intensité de courant de 23 mA. Après 4 h 23 min. de fonctionnement pendant lesquelles une quantité d'électricité égale à 365 coulombs a circulé dans l'électrolyseur, on remarque que seulement 15,3 % de l'acide formique contenu dans la solution ont été détruits, alors que la quantité d'électricité utilisée était suffisante pour en détruire 78 %.

Dans ce cas, comme dans l'Exemple 2, l'empoisonnement de l'électrode est responsable de ce mauvais résultat.

**Exemple 3** : Destruction de l'acide dihydroxymalonique (DHM).

Dans cet exemple, on part d'une solution aqueuse ayant la même composition que celle de l'Exemple 1 et on réalise son électrolyse comme dans l'exemple 1, mais en faisant varier le potentiel imposé à l'électrode de travail pour qu'elle fonctionne alternativement à deux potentiels différents : $E_1$ pendant une durée $t_1$ et $E_2$ pendant une durée $t_2$ et en répétant ces cycles pendant toute la durée de l'électrolyse.

Les conditions retenues sont les suivantes :

$$E_1 = 1,2 \text{ V/ECS}, t_1 = 30 \text{ s.}$$

$$E_2 = -0,4 \text{ V/ECS}, t_2 = 10 \text{ s.}$$

La figure 3 illustre les variations de la densité de courant anodique rapportée à l'aire d'une seule face de l'électrode de travail en fonction de la durée d'électrolyse, après 1 h 30 min. d'électrolyse.

Sur cette figure, on remarque que la densité de courant anodique atteint une valeur maximale voisine de 23 $mA/cm^2$ pour le début de chaque cycle de potentiel, lorsque l'électrode de travail est portée au potentiel $E_1 = 1,2$ V/ECS , puis décroît, par suite de la passivation de l'électrode. Cette valeur de densité de courant maximale est restaurée à chaque cycle, pour le temps d'expérience considéré, après que l'électrode ait été portée pendant 10 s au potentiel $E_2$ de -0,4 V/ECS, auquel s'effectue la dépassivation de l'électrode. Ainsi, par la succession de ces cycles de potentiel imposés à l'électrode de travail, on maintient dans la cellule d'électrolyse un courant élevé, qui traduit la destruction de l'acide DHM.

Le tableau 1 ci-dessous montre comment varie le taux de destruction du DHM au cours du temps d'électrolyse.

TABLEAU 1

| TEMPS (min) | TAUX DE DESTRUCTION (%) |
|---|---|
| 0 | 0 |
| 35 | 5 |
| 69 | 16,5 |
| 103 | 30 |
| 139 | 40,5 |
| 203 | 59 |
| 250 | 71 |
| 313 | 82 |
| 540 | 100 |

Les résultats du tableau 1 montrent que l'on atteint un taux de destruction proche de 100 % pour une durée totale d'expérience voisine de 540 min. Ainsi, la vitesse de destruction de l'acide DHM rapportée à l'unité de surface d'électrode de travail est égale à :

$$0,9 \text{ mol/h/m}^2.$$

Il convient d'observer que, en ne tenant compte que du courant anodique circulant dans l'électrode de travail, le rendement faradique de destruction de l'acide DHM est voisin de 100 %, valeur qui était attendue pour une électrolyse à potentiel imposé.

**Exemple 4** : Destruction de l'acide formique.

Dans cet exemple, on suit le même mode opératoire que dans l'exemple 3 pour détruire l'acide formique présent dans 80 ml d'une solution aqueuse à 0,05 mol/l d'acide formique et 0,1 mol/l de $NaClO_4$, en utilisant comme électrode de travail une plaque cylindrique de platine ayant un diamètre de 2 cm et une hauteur de 2 cm, soit une aire active de 12,56 $cm^2$ et une électrode auxiliaire en platine constituée par une grille cylindrique d'un diamètre de 3,6 cm et d'une hauteur de 2 cm. On réalise l'électrolyse en mode potentiostatique en imposant à l'électrode de travail les potentiels suivants pendant les durées suivantes :

$$E_1 = 0,3 \text{ V /ECS et } t_1 = 30 \text{ s,}$$

$$E_2 = 1,3 \text{ V /ECS et } t_2 = 10 \text{ s.}$$

Les résultats obtenus après 7 h 26 de fonctionnement sont donnés dans le tableau 2 qui suit.

**Exemples 5 à 7** : Destruction de l'acide formique.

Dans ces exemples, on suit le même mode opératoire que dans l'exemple 4 pour traiter la même solution, mais dans des conditions différentes uniquement en ce qui concerne $E_1$, $t_1$ et $E_2$ Les conditions utilisées et les résultats obtenus sont donnés également dans le tableau 2.

Les résultats du tableau 2 montrent que les valeurs des potentiels $E_1$ et $E_2$, ainsi que celles des durées $t_1$ et $t_2$ influent sensiblement sur la vitesse de destruction de l'acide formique. Par ailleurs, ces résultats montrent que les rendements faradiques sont dans tous les cas proches de 100 %.

TABLEAU 2

| EX | $E_1$ (V/ECS) | $t_1$ (a) | $E_2$ (V/ECS) | $t_2$ (s) | DUREE TOTALE | QUANTITE DE COURANT (C) | % ACIDE DETRUIT | VITESSE DE DESTRUCTION (%/h) |
|---|---|---|---|---|---|---|---|---|
| 4 | 0,3 | 30 | 1,3 | 10 | 7h26 | 700 | 78 | 10,5 |
| 5 | 0,3 | 30 | 1 | 10 | 7h30 | 645 | 73 | 9,7 |
| 6 | 0,2 | 30 | 1 | 10 | 8h05 | 526 | 61 | 7,5 |
| 7 | 0,3 | 120 | 1 | 10 | 8h19 | 525 | 58 | 7 |

**Exemple 8** :

Dans cet exemple, on suit le même mode opératoire que dans l'exemple 4 pour détruire l'acide oxalique présent dans une solution aqueuse contenant 0,05 mol/l d'acide oxalique et 0,1 mol/l de $NaClO_4$, d'un volume de 100 ml, en utilisant les conditions données dans le tableau 3. Dans ce cas, on obtient une destruction quantitative de l'acide oxalique, la vitesse de destruction étant de 1,6 $\text{mol/h/m}^2$ rapportée à la surface active de l'électrode de travail.

Dans le tableau 3, on a repris également les résultats obtenus en ce qui concerne la destruction de l'acide formique conformément à l'exemple 5 et les résultats obtenus concernant la destruction de l'acide dihydroxymalonique dans le cas de l'exemple 3.

Les résultats du tableau 3 montrent que l'aptitude à la destruction varie pour ces composés selon la séquence suivante : acide oxalique > acide DHM > acide formique.

TABLEAU 3

| EX | Soluté organique | $E_1$ (V/ECS) | $t_1$ (s) | $E_2$ (V/EC) | $t_2$ (s) | Vitesse de destruction (mol/h/m$^2$) |
|---|---|---|---|---|---|---|
| 5 | Acide formique | 0,3 | 30 | 1 | 10 | 0,26 |
| 8 | Acide oxalique | 1,3 | 1200 | -0,45 | 60 | 1,6 |
| 3 | Acide DHM | 1,2 | 30 | -0,4 | 10 | 0,9 |

**Exemple 9** : Destruction de l'acide dihydroxymalonique.

Dans cet exemple, on réalise la destruction de l'acide dihydroxymalonique présent dans une solution aqueuse contenant 0,05 mol/l d'acide DHM et 0,1 mol/l de $HNO_3$ en réalisant l'électrolyse comme dans l'Exemple 1, mais en mode intensiostatique en imposant un courant de 81,5 mA et en inversant la polarité des électrodes toutes les 30 secondes. L'évolution du taux de destruction de l'acide DHM en fonction de la durée d'électrolyse est donnée dans le tableau 4 qui suit.

TABLEAU 4

| TEMPS (min) | TAUX DE DESTRUCTION (%) |
|---|---|
| 0 | 0 |
| 41 | 8 |
| 82 | 22 |
| 123 | 37 |
| 164 | 51 |
| 206 | 65,7 |
| 247 | 77,1 |
| 308 | 86,3 |
| 330 | 100 |

Au vu de ce tableau, on remarque qu'on obtient une destruction quantitative de l'acide DHM pour une durée d'électrolyse de 330 min, ce qui correspond à une vitesse de destruction de l'acide DHM égale à 1,48 mol/h/m$^2$ et un rendement faradique proche de 95 %.

Cette vitesse de destruction est plus élevée que celle relative à l'Exemple 3, ce qui montre que le mode de fonctionnement intensiostatique avec polarités alternées est plus avantageux que le mode potentiostatique.

On obtient des résultats analogues avec les acides formique et oxalique en réalisant l'électrolyse en mode intensiostatique et en inversant la polarité des électrodes toutes les 30 secondes.

**Revendications**

1. Procédé de destruction d'au moins un soluté organique complexant présent dans une solution aqueuse choisi parmi les acides carboxyliques, hydroxycarboxyliques, polycarboxyliques, polyhydroxypolycarboxyliques, aminopolycarboxyliques et polyaminopolycarboxyliques, caractérisé en ce que l'on soumet la solution aqueuse à une électrolyse dans une cellule d'électrolyse comprenant une électrode de travail, en appliquant à l'électrode de travail un potentiel suffisant pour détruire le(s) soluté(s) par oxydation électrolytique et en ce que l'on modifie périodiquement le potentiel appliqué à l'électrode de travail ou le sens de l'intensité du courant traversant la cellule de façon à réaliser périodiquement une régénération de l'électrode de travail.

2. Procédé selon la revendication 1, caractérisé en ce que l'on réalise l'électrolyse selon le mode potentiostatique et en ce que l'on modifie périodiquement le potentiel de l'électrode de travail de façon à effectuer des cycles successifs comprenant chacun une première étape d'électrolyse à un potentiel $E_1$ pendant une durée $t_1$ et une deuxième étape d'électrolyse à un potentiel $E_2$ pendant une durée $t_2$.

3. Procédé selon la revendication 2, caractérisé en ce que $t_1$ est de 20 à 1200 secondes.

4. Procédé selon l'une quelconque des revendications 2 et 3, caractérisé en ce que $t_2$ est de 5 à 60 secondes.

5. Procédé selon l'une quelconque des revendications 2 à 4, caractérisé en ce que l'écart entre $E_1$ et $E_2$ est de 0,5 à 2 Volts.

6. Procédé selon la revendication 1, caractérisé en ce que l'on réalise l'électrolyse selon le mode intensiostatique et en ce que l'on inverse périodiquement le sens du courant dans la cellule de façon à effectuer des cycles successifs comprenant chacun une première étape à une intensité de courant I pendant une durée $t_1$ et une deuxième étape à la même intensité mais avec un courant inversé pendant une durée $t_2$.

7. Procédé selon la revendication 6, caractérisé en ce que $t_1$ est égal à $t_2$.

8. Procédé selon l'une quelconque des revendications 6 et 7, caractérisé en ce que $t_1$ et $t_2$ sont de 10 à 100 s.

9. Procédé selon l'une quelconque des revendications 6 à 8, caractérisé en ce que l'intensité du courant est de 4 à 20 mA/cm$^2$.

10. Procédé selon l'une quelconque des revendications 1 à 9, caractérisé en ce que le soluté organique complexant est l'acide formique, l'acide dihydroxymalonique ou l'acide oxalique.

11. Procédé selon l'une quelconque des revendications 1 a 10, caractérisé en ce que la solution aqueuse est un effluent radioactif.

## Claims

1. Process for the destruction of at least one complexing organic solute present in an aqueous solution, chosen from among carboxylic, hydroxycarboxylic, polycarboxylic, polyhydroxypolycarboxylic, aminopolycarboxylic and polyaminopolycarboxylic acids, characterized in that the aqueous solution is subject to electrolysis in an electrolytic cell comprising a working electrode, by applying to the working electrode an adequate potential for destroying the solute or solutes by electrolytic oxidation and in that periodic modification takes place of the potential applied to the working electrode or the direction of the intensity of the current flowing through the cell so as to periodically bring about a regeneration of the working electrode.

2. Process according to claim 1, characterized in that electrolysis takes place according to the potentiostatic mode and in that periodic modification takes place of the potential of the working electrode so as to perform successive cycles, each comprising a first electrolysis stage at a potential $E_1$ for a time $t_1$ and a second electrolysis stage at a potential $E_2$ for a time $t_2$.

3. Process according to claim 2, characterized in that $t_1$ is 20 to 1200 seconds.

4. Process according to either of the claims 2 and 3, characterized in that $t_2$ is 5 to 60 seconds.

5. Process according to any one of the claims 2 to 4, characterized in that the difference between $E_1$ and $E_2$ is 0.5 to 2 V.

6. Process according to claim 1, characterized in that electrolysis is performed according to the intensiostatic mode and in that periodic reversal takes place of the direction of the current in the cell so as to perform successive cycles, each comprising a first stage at a current intensity I for a time $t_1$ and a second stage at the same intensity, but with a reversed current for a time $t_2$.

7. Process according to claim 6, characterized in that $t_1$ is equal to $t_2$.

8. Process according to either of the claims 6 and 7, characterized in that $t_1$ and $t_2$ are 10 to 100 s.

9. Process according to any one of the claims 6 to 8, characterized in that the intensity of the current is 4 to 20 mA/cm$^2$.

10. Process according to any one of the claims 1 to 9, characterized in that the organic solute is a complexing organic solute chosen from among formic, dihydroxymalonic or oxalic acid.

11. Process according to any one of the claims 1 to 10, characterized in that the aqueous solution is a radioactive effluent.

## Patentansprüche

1. Verfahren zur Zerstörung mindestens einer in einer wäßrigen Lösung vorhandenen komplexbildenden organischen gelösten Substanz, gewählt unter den Carbonsäuren, Hydroxycarbonsäuren, Polycarbonsäuren, Polyhydroxypolycarbonsäuren, Aminopolycarbonsäuren und Polyaminopolycarbonsäuren, dadurch gekennzeichnet, daß man in einer Elektrolysezelle, welche eine Arbeitselektrode enthält, die wäßrige Lösung einer Elektrolyse unterzieht, indem man an die Arbeitselektrode ein Potential anlegt, das ausreicht, die gelöste(n) Substanz(en) durch elektrolytische Oxidation zu zerstören, und dadurch, daß man das an die Arbeitselektrode angelegte Potential oder die Richtung der die Zelle durchquerenden Stromstärke periodisch verändert, um periodisch eine Regeneration der Arbeitselektrode durchzuführen.

2. Verfahren nach Anspruch 1, dadurch gekennzeichnet, daß man die Elektrolyse auf die potentiostatische Art durchführt, und dadurch, daß man das Potential der Arbeitselektrode periodisch verändert, um aufeinanderfolgende Zyklen auszuführen, deren jeder einen ersten Elektrolyseschritt während einer Zeit $t_1$ bei einem Potential $E_1$ und einen zweiten Elektrolyseschritt während einer Zeit $t_2$ bei einem Potential $E_2$ umfaßt.

3. Verfahren nach Anspruch 2, dadurch gekennzeichnet, daß $t_1$ 20 bis 1200 Sekunden beträgt.

4. Verfahren nach einem der Ansprüche 2 und 3, dadurch gekennzeichnet, daß $t_2$ 5 bis 60 Sekunden beträgt.

5. Verfahren nach einem der Ansprüche 2 bis 4, dadurch gekennzeichnet, daß der Unterschied zwischen $E_1$ und $E_2$ 0,5 bis 2 Volt beträgt.

6. Verfahren nach Anspruch 1, dadurch gekennzeichnet, daß man die Elektrolyse auf die galvanostatische Art durchführt, und dadurch, daß man die Richtung des Stroms in der Zelle periodisch umkehrt, um aufeinanderfolgende Zyklen auszuführen, deren jeder einen ersten Schritt während einer Zeit $t_1$ bei einer Stromstärke I und einen zweiten Schritt während einer Zeit $t_2$ bei der gleichen Stromstärke, aber mit umgekehrtem Strom, umfaßt.

7. Verfahren nach Anspruch 6, dadurch gekennzeichnet, daß $t_1$ gleich $t_2$ ist.

8. Verfahren nach einem der Ansprüche 6 und 7, dadurch gekennzeichnet, daß $t_1$ und $t_2$ 10 bis 100 s betragen.

9. Verfahren nach einem der Ansprüche 6 bis 8, dadurch gekennzeichnet, daß die Stromstärke 4 bis 20 mA/cm$^2$ beträgt.

10. Verfahren nach einem der Ansprüche 1 bis 9, dadurch gekennzeichnet, daß die komplexbildende organische gelöste Substanz Ameisensäure, Dihydroxymalonsäure oder Oxalsäure ist.

11. Verfahren nach einem der Ansprüche 1 bis 10, dadurch gekennzeichnet, daß die wäßrige Lösung ein radioaktives Abwasser ist.

FIG. 1

EP 0 672 623 B1

FIG. 2

FIG. 3